# EUROPEAN PATENT SPECIFICATION

(11) **EP 3 302 098 B1**
(45) Date of publication and mention of the grant of the patent: **08.01.2020**
(21) Application number: 16725511.6
(22) Date of filing: 25.05.2016
(51) Int. Cl.: A23P 10/40, A23L 27/00, A23L 3/46

(54) **SPRAY DRYING**
SPRÜHTROCKNUNG
SÉCHAGE PAR ATOMISATION

(30) Priority: 27.05.2015 US 201561166737 P
(43) Date of publication of application: 11.04.2018
(73) Proprietor: Givaudan S.A., 1214 Vernier (CH)
(72) Inventor: CHANEY, Michael, Ludlow, Kentucky 41016 (US); SHERMAN, Gregory Alan, Cincinnati, Ohio 45245 (US)
(74) Representative: Global Patents
(86) International application number: PCT/EP2016/061798
(87) International publication number: WO 2016/189032

(56) References cited:
- EP-A1- 0 168 956
- EP-A2- 0 515 110
- EP-A2- 1 064 856
- WO-A1-03/045170
- US-A- 5 124 162
- US-A- 5 720 978
- US-A1- 2008 199 592

## Description

This disclosure relates to spray drying, and to a product obtained thereby.

Spray drying is a commonly-used technique in the formulation of flavors. The flavor is blended with an aqueous matrix material, which is then sprayed into a heated atmosphere. This dries and solidifies the sprayed particles, which can then be collected. Typical matrix constituents comprise an emulsifier, a film-former and/or filler and a plasticizer. A typical example is found in US 5,124,162, which discloses a spray-dried mixture of malto-dextrin and a mixture of disaccharides and monosaccharides.

One very commonly used plasticizer is sugar. The function of the plasticizer is to provide low porosity, increased density and increased resistance to oxidation. Sugar performs these tasks admirably. Unfortunately, sugar is also slightly hygroscopic and this reduces the humidity resistance.

It has now been found that it is possible to reduce considerably, and even eliminate completely, this problem, and to obtain spray-dried particles with excellent humidity resistance, plus all the other desirable properties. There is therefore provided a method of preparing spray-dried flavor-containing particles, comprising the addition of flavor to an aqueous, sugar-free matrix and spray-drying the resulting blend, the matrix comprising an emulsifier, a film former and at least one metal salt, selected from the ferrous, alkali metal and alkaline earth metal salts of citric, gluconic and tartaric acids, wherein the at least one salt is present at a concentration of from 10-30% by weight of the non-flavor particle constituents, and wherein the matrix proportion of the particle is from 10-90% by weight.

There is additionally provided a spray-dried, flavor-containing particle comprising flavor in a sugar-free matrix, the matrix comprising an emulsifier, a film former and at least one metal salt, selected from the ferrous, alkali metal and alkaline earth metal salts of citric, gluconic and tartaric acids, prepared by the method hereinabove described.

Methods of making spray-dried flavours utilising alkali and alkaline earth metal organic acid salts, such as citrates and tartrates, as carriers are known, typical examples being EP 0168 956, WO 03/045170 and US 2008/199592. However, none of these disclose the particular combination hereinabove described.

The matrix may be any of the usual materials known to the art for use in spray-dried flavors. The emulsifier may be selected from any natural material with the desired surface activity. Typical examples include proteins and starches, including modified starches. A particular starch is OSA (octenyl succinate anhydride)-modified starch.

The film-former/filler may be any suitable material, non-limiting examples including food grade and commercially-utilized film formers such as corn syrup solids, gum acacia, modified celluloses, gelatin and other animalic or botanical proteins, a particular example being maltodextrin.

The metal salts are well-known and commercially-available items. Particular examples of such salts include, but are not limited to: potassium gluconate, tripotassium citrate, potassium bitartrate, sodium gluconate, magnesium gluconate and ferrous gluconate. A particular example is potassium gluconate.

More than one such salt may be used. Particular combinations include:
- tripotassium citrate and potassium gluconate
- tripotassium citrate and potassium bitartrate
- potassium gluconate, tripotassium citrate and potassium bitartrate

The salts may be used at a concentration of from 10-30% by weight of the non-flavor particle constituents (that is, all particle constituents minus the flavor). The matrix proportion of the particle is from 10-90%. The flavor is present at a proportion of up to 15% by weight of the particle.

Particular individual salt weight proportions of the non-flavor particle constituents include:

| | |
|---|---|
| Potassium Gluconate | 20-30% |
| Magnesium Gluconate | 25% |
| Ferrous Gluconate | 25% |
| Potassium Bitartarate | 25% |
| Tripotassium Citrate | 10-25% |
| Magnesium Citrate | 20-30% |

Particular combinations of salts by weight of non-flavor particle constituents:
Potassium Gluconate & Tripotassium Citrate (1:2) at 30%
Potassium Gluconate & Magnesium Citrate (1:2) at 30%
Potassium Gluconate & Tripotassium Citrate (1:1) at 20%
Potassium Bitartarate & Tripotassium Citrate (1:1) at 20%
Potassium Gluconate, Potassium Bitartarate & Tripotassium Citrate (1:1:1) at 30%

The particles may be produced using standard spray drying equipment and typical conditions known to the art. Conditions may naturally vary depending on the nature of the equipment and the material being sprayed, but the person skilled in the art can readily determine the appropriate conditions in every case with only routine experimentation. Typical examples of conditions that produce dry powder with a moisture content of less than 5% and water activity in the desirable range of from 0.05 to 0,30 at 25°C. Water activity (A_{w}) is the partial vapor pressure of water in a substance divided by the standard state partial vapor pressure of water. It is a measurement of the relative humidity of the sample in a closed chamber - basically A_{w} is the equilibrium humidity emitted by the sample material.

Typical parameters for use on a conventional tall-form tower spray dryer are:
Inlet temperature - 120-180°C
Outlet temperature - 70-95°C

The finished material size should be 20-200µm mean diameter by volume distribution, as measured by laser diffraction particle size instrument.

The disclosure is further described with reference to the following non-limiting examples.

### Example 1: Preparation of test matrix

A test matrix was prepared by blending Capsul™ 1450, a sodium octenyl succinate-modified starch, and 25 DE maltodextrin in the weight proportion of 10:90. This is used as a control. When salts were added, the proportion of maltodextrin is reduced by the proportion of salt added. The salts are shown in table 1.

**Table 1 - Overview of salt samples**

| **Sample No.** | **Salt/Level** |
|---|---|
| 1 | Tripotassium Citrate 25%, Sugar 25% |
| 2 | Tripotassium Citrate 20% |
| 3 | Tripotassium Citrate 20% & Potassium Gluconate 10% |
| 4 | Magnesium Citrate 10%, Mannitol 20% |
| 5 | Magnesium Citrate 20% & Potassium Gluconate 10% |
| 6 | Potassium Gluconate 25% |
| 7 | Magnesium Gluconate 25% |
| 8 | Ferrous Gluconate 25% |
| 9 | Tripotassium Citrate 25% |
| 10 | Magnesium Citrate 25% |
| 11 | Calcium Citrate 25% |
| 12 | Calcium Magnesium Citrate 25% |
| 13 | Calcium Lactate 25% |
| 14 | Magnesium Lactate 25% |
| 15 | Calcium Fumarate 25% |
| 16 | Potassium Bitartrate 25% |
| 17 | Sodium Chloride 25% |
| 18 | Potassium Chloride 25% |
| 19 | Potassium Gluconate 10% & Tripotassium Citrate 10% |
| 20 | Potassium Gluconate 10% & Potassium Bitartrate 10% |
| 21 | Tripotassium Citrate 10% & Potassium Bitartrate 10% |
| 22 | Potassium Gluconate 10%, Tripotassium Citrate 10% & Potassium Bitartrate 10% |
| 23 | CONTROL SAMPLE (no salt) |
| 24 | Sodium Gluconate 25% |

The loading in all cases was an addition to the matrix+salt of D-limonene at a rate of 15% of the matrix+salt.

The particles were prepared by blending the modified starch, maltodextrin and (where applicable) salt/salt mixture into warm water (40°C). To this, the D-limonene was added, and the mixture subjected to high shear mixing to emulsify the mixture to a mean particle size of less than 1.0 micron as measured by a laser diffraction particle size analyzer.

The emulsion was then spray-dried using an Anhydro PSD55 spray drying unit equipped with a rotary atomizer and a peristaltic delivery pump. Inlet and outlet temperatures were respectively 170°C (±5°C) and 95°C (±3°C). The powder was recovered by means of a cyclone separator.

### Example 2: testing of oxidative stability

The various particles were tested for oxidative stability by determining the proportion of D-limonene remaining after various periods of storage. The samples were stored at 40°C and 30% relative humidity in LDPE bags of a type that did not provide a barrier to moisture absorption. Samples were analyzed by GC and MS. In addition to the control sample, there were also included two particles made using the same matrix and made using the same conditions and equipment, but with sugar in place of the salts, one with 50% sugar, the other with 40% sugar. These were designated S1 and S2, respectively.

The results are shown in Tables 2 and 3. Table 2 shows the proportion of D-limonene remaining and Table 3 shows the proportion of oxidation by-products present. An acceptable D-limonene loss was less than 10% of the original proportion (i.e. a limonene content of greater than 13.5%), or when the oxidation by-product proportion exceeded 2.5% of the original limonene proportion (at which level the sample fails organoleptically), no further measurements were taken.

**Table 2 - Stability Study Results for sample D-Limonene assay values**

| **Stability-Limonene** | | | | | | | |
|---|---|---|---|---|---|---|---|
| **Levels** | | | | | | | |
| Sample No. | Initial | 4-Weeks | 8-Weeks | 12-Weeks | 16-Weeks | 18-Weeks | 24-Weeks |
| 1 | 14.18 | 13.51 | 12.83 | 11.99 | 11.40 | - | - |
| 2 | 15.69 | 14.67 | 13.78 | 12.74 | 11.87 | - | - |
| 3 | 13.91 | 13.73 | 13.53 | 13.26 | 13.08 | - | 12.92 |
| 4 | 14.44 | 14.33 | 14.22 | 14.10 | 13.96 | - | 13.94 |
| 5 | 14.59 | 14.52 | 14.41 | 14.26 | 14.18 | - | 14.33 |
| 6 | 14.75 | 14.46 | 14.27 | 13.86 | - | - | - |
| 7 | 14.58 | 14.19 | 13.88 | 13.60 | - | - | - |
| 8 | 14.79 | 14.09 | 13.89 | 13.25 | - | - | - |
| 9 | 14.66 | 14.37 | 13.88 | 13.82 | - | - | - |
| 10 | 13.45 | 12.64 | 11.96 | 11.34 | - | - | - |
| 11 | 14.04 | 12.99 | 12.23 | 11.61 | - | - | - |
| 12 | 13.78 | 12.66 | 11.85 | 11.28 | - | - | - |
| 13 | 14.64 | 13.29 | 12.59 | 12.04 | - | - | - |
| 14 | 14.11 | 13.40 | 12.84 | 12.50 | - | - | - |
| 15 | 16.76 | 15.91 | 15.21 | 14.67 | - | - | - |
| 16 | 14.82 | 14.22 | 13.50 | 13.04 | - | - | - |
| 17 | 14.52 | 14.20 | 13.79 | 13.35 | - | 12.87 | 12.54 |
| 18 | 14.82 | 14.44 | 13.98 | 13.55 | - | 13.16 | 12.86 |
| 19 | 14.67 | 14.41 | 14.31 | 14.10 | - | 13.98 | 13.92 |
| 20 | 14.68 | 14.46 | 14.10 | 13.87 | - | 13.13 | 13.01 |
| 21 | 14.91 | 14.62 | 14.48 | 14.20 | - | 14.16 | 14.03 |
| 22 | 14.85 | 14.60 | 14.55 | 14.01 | - | 13.82 | 13.70 |
| 23 (control) | 14.38 | 13.67 | 13.25 | 12.71 | - | - | - |
| 24 | 14.57 | 14.26 | 14.18 | 14.09 | - | - | - |
| S1 | 13.56 | 13.47 | 13.37 | 12.91 | 12.50 | - | - |
| S2 | 14.12 | 13.39 | 13.24 | 12.71 | - | - | - |

**Table 3**

| **Stability - Oxidation Products Levels** | | | | | | | |
|---|---|---|---|---|---|---|---|
| Sample No. | Initial | 4-Weeks | 8-Weeks | 12-Weeks | 16-Weeks | 18-Weeks | 24-Weeks |
| 1 | 0.31 | 1.23 | 2.23 | 3.40 | 4.03 | - | - |
| 2 | 0.41 | 1.58 | 2.37 | 3.41 | 4.09 | - | - |
| 3 | 0.39 | 0.77 | 1.02 | 1.41 | 1.69 | - | 2.60 |
| 4 | 0.67 | 0.60 | 0.80 | 0.67 | 0.88 | - | 2.48 |
| 5 | 0.50 | 0.51 | 0.60 | 0.51 | 0.69 | - | 1.18 |
| 6 | 0.47 | 0.62 | 0.83 | 0.83 | - | - | - |
| 7 | 0.68 | 1.04 | 1.55 | 1.29 | - | - | - |
| 8 | 0.65 | 0.98 | 1.38 | 0.97 | - | - | - |
| 9 | 0.40 | 0.56 | 0.73 | 0.55 | - | - | - |
| 10 | 0.48 | 1.15 | 2.62 | 3.05 | - | - | - |
| 11 | 0.76 | 2.09 | 2.94 | 3.23 | - | - | - |
| 12 | 0.55 | 1.99 | 2.97 | 3.09 | - | - | - |
| 13 | 0.60 | 1.93 | 3.55 | 4.03 | - | - | - |
| 14 | 0.57 | 1.19 | 2.32 | 2.36 | - | - | - |
| 15 | 0.66 | 1.51 | 2.67 | 2.88 | - | - | - |
| 16 | 0.35 | 1.03 | 1.61 | 1.77 | - | - | - |
| 17 | 0.29 | 0.57 | 1.06 | 2.04 | - | 2.26 | 3.25 |
| 18 | 0.29 | 0.52 | 0.95 | 1.86 | - | 2.16 | 3.17 |
| 19 | 0.31 | 0.58 | 0.82 | 1.21 | - | 1.22 | 1.89 |
| 20 | 0.25 | 0.62 | 0.91 | 1.51 | - | 2.62 | 3.80 |
| 21 | 0.26 | 0.64 | 0.81 | 1.30 | - | 1.33 | 2.14 |
| 22 | 0.27 | 0.51 | 0.65 | 1.38 | - | 1.50 | 2.37 |
| 23 (control) | 0.51 | 1.90 | 2.54 | - | - | - | - |
| 24 | 0.45 | 0.72 | 0.74 | | - | - | - |

From the tables, it can be seen that
(i) the control and the two sugar-containing samples failed early.
(ii) especially good results were obtained from samples 4, 5,19, 21 and 22, that is:
   Magnesium Citrate 10%, Mannitol 20%
   Magnesium Citrate 20% & Potassium Gluconate 10%
   Potassium Gluconate 10% & Tripotassium Citrate 10%
   Tripotassium Citrate 10% & Potassium Bitartrate 10%
   Potassium Gluconate 10%, Tripotassium Citrate 10% & Potassium Bitartrate 10%

Many of the other salts were acceptable for short duration storage times.

## Claims

1. A method of preparing spray-dried flavor-containing particles, comprising the addition of flavor to an aqueous, sugar-free matrix and spray-drying the resulting blend, the matrix comprising an emulsifier, a film former and at least one metal salt, selected from the ferrous, alkali metal and alkaline earth metal salts of citric, gluconic and tartaric acids, wherein the at least one salt is present at a concentration of from 10-30% by weight of the non-flavor particle constituents, and wherein the matrix proportion of the particle is from 10-90% by weight..

2. A method according to claim 1, in which the salt is selected from potassium gluconate, tripotassium citrate, potassium bitartrate, sodium gluconate, magnesium gluconate and ferrous gluconate.

3. A method according to claim 2, in which the weight proportions of individual salts are selected as follows:
| | |
|---|---|
| Potassium Gluconate | 20-30% |
| Magnesium Gluconate | 25% |
| Ferrous Gluconate | 25% |
| Potassium Bitartarate | 25% |
| Tripotassium Citrate | 10-25% |
| Magnesium Citrate | 20-30% |

4. A method according to claim 1, in which more than one metal salt is used.

5. A method according to claim 4, in which the more than one salt is selected from one of the following combinations:
tripotassium citrate and potassium gluconate
tripotassium citrate and potassium bitartrate
potassium gluconate, tripotassium citrate and potassium bitartrate.

6. A method according to claim 5, in which the following weight proportions of salt are used:
Potassium Gluconate & Tripotassium Citrate (1:2) at 30%
Potassium Gluconate & Magnesium Citrate (1:2) at 30%
Potassium Gluconate & Tripotassium Citrate (1:1) at 20%
Potassium Bitartarate & Tripotassium Citrate (1:1) at 20%
Potassium Gluconate, Potassium Bitartarate & Tripotassium Citrate (1:1:1) at 30%.

7. A method according to claim 1, in which flavor is present at a proportion of up to 15% by weight of the particle.

8. A spray-dried, flavor-containing particle comprising flavor in a sugar-free matrix, the matrix comprising an emulsifier, a film former and at least one metal salt, selected from the ferrous, alkali metal and alkaline earth metal salts of citric, gluconic and tartaric acids, prepared by a method according to claim 1.

9. A spray-dried, flavor-containing particle according to claim 8, in which the flavor content is up to 15% by weight of the particle.

## Patentansprüche

1. Verfahren zur Herstellung sprühgetrockneter geschmacksstoffhaltiger Partikel, das die Zugabe von Geschmacksstoff zu einer wässrigen, zuckerfreien Matrix und das Sprühtrocknen der resultierenden Mischung umfasst, wobei die Matrix einen Emulgator, einen Filmbildner und mindestens ein Metallsalz, ausgewählt aus den Eisen(II)-, Alkalimetall- und Erdalkalimetallsalzen von Citronensäure, Gluconsäure und Weinsäure, umfasst, wobei das mindestens eine Salz in einer Konzentration von 10-30 %, bezogen auf das Gewicht der Nichtgeschmacksstoff-Partikelbestandteile, vorliegt und wobei der Matrixanteil des Partikels 10-90 Gewichts-% beträgt.

2. Verfahren nach Anspruch 1, bei dem das Salz aus Kaliumgluconat, Trikaliumcitrat, Kaliumhydrogentartrat, Natriumgluconat, Magnesiumgluconat und Eisen(II)-gluconat ausgewählt ist.

3. Verfahren nach Anspruch 2, bei dem die Gewichtsanteile der einzelnen Salze wie folgt ausgewählt sind:
| | |
|---|---|
| Kaliumgluconat | 20-30 % |
| Magnesiumgluconat | 25 % |
| Eisen(II)-gluconat | 25 % |
| Kaliumhydrogentartrat | 25 % |
| Trikaliumcitrat | 10-25 % |
| Magnesiumcitrat | 20-30 %. |

4. Verfahren nach Anspruch 1, bei dem mehr als ein Metallsalz verwendet wird.

5. Verfahren nach Anspruch 4, bei dem das mehr als eine Salz aus einer der folgenden Kombinationen ausgewählt ist:
Trikaliumcitrat und Kaliumgluconat
Trikaliumcitrat und Kaliumhydrogentartrat Kaliumgluconat, Trikaliumcitrat und
Kaliumhydrogentartrat.

6. Verfahren nach Anspruch 5, bei dem die folgenden Gewichtsanteile der Salze verwendet werden:
Kaliumgluconat & Trikaliumcitrat (1:2) in einem Anteil von 30 %
Kaliumgluconat & Magnesiumcitrat (1:2) in einem Anteil von 30 %
Kaliumgluconat & Trikaliumcitrat (1:1) in einem Anteil von 20 %
Kaliumhydrogentartrat & Trikaliumcitrat (1:1) in einem Anteil von 20 %
Kaliumgluconat, Kaliumhydrogentartrat & Trikaliumcitrat (1:1:1) in einem Anteil von 30 %.

7. Verfahren nach Anspruch 1, bei dem Geschmacksstoff in einem Anteil von bis zu 15 %, bezogen auf das Partikelgewicht, vorliegt.

8. Sprühgetrocknetes geschmacksstoffhaltiges Partikel, das Geschmacksstoff in einer zuckerfreien Matrix umfasst, wobei die Matrix einen Emulgator, einen Filmbildner und mindestens ein Metallsalz, ausgewählt aus den Eisen(II)-, Alkalimetall- und Erdalkalimetallsalzen von Citronensäure, Gluconsäure und Weinsäure, umfasst, hergestellt durch ein Verfahren nach Anspruch 1.

9. Sprühgetrocknetes geschmacksstoffhaltiges Partikel nach Anspruch 8, in dem der Gehalt an Geschmackstoff bis zu 15 %, bezogen auf das Partikelgewicht, beträgt.

## Revendications

1. Méthode de préparation de particules contenant un arôme et séchées par pulvérisation, comprenant l'addition d'un arôme à une matrice aqueuse exempte de sucre, et le séchage par pulvérisation du mélange résultant, la matrice comprenant un émulsifiant, un agent filmogène et au moins un sel de métal, choisi parmi les sels ferreux, de métaux alcalins et de métaux alcalino-terreux des acides citrique, gluconique et tartrique, où le au moins un sel est présent selon une concentration de 10-30% en poids des constituants de particules exemptes d'arôme, et où la proportion de matrice dans la particule est de 10-90% en poids.

2. Méthode selon la revendication 1, dans laquelle le sel est choisi parmi le gluconate de potassium, le citrate de tripotassium, le bitartrate de potassium, le gluconate de sodium, le gluconate de magnésium et le gluconate ferreux.

3. Méthode selon la revendication 2, dans laquelle les proportions pondérales de sels individuels sont choisies comme suit :
| | |
|---|---|
| Gluconate de potassium | 20-30% |
| Gluconate de magnésium | 25% |
| Gluconate ferreux | 25% |
| Bitartrate de potassium | 25% |
| Citrate de tripotassium | 10-25% |
| Citrate de magnésium | 20-30%. |

4. Méthode selon la revendication 1, dans laquelle plus d'un sel de métal est utilisé.

5. Méthode selon la revendication 4, dans laquelle le plus d'un sel est choisi parmi l'une des combinaisons suivantes
citrate de tripotassium et gluconate de potassium citrate de tripotassium et bitartrate de potassium gluconate de potassium, citrate de tripotassium et bitartrate de potassium.

6. Méthode selon la revendication 5, dans laquelle les proportions pondérales suivantes de sel sont utilisées :
Gluconate de potassium & Citrate de tripotassium (1:2) à 30%
Gluconate de potassium & Citrate de magnésium (1:2) à 30%
Gluconate de potassium & Citrate de tripotassium (1:1) à 20%
Bitartrate de potassium & Citrate de tripotassium (1:1) à 20%
Gluconate de potassium, Bitartrate de potassium & Citrate de tripotassium (1:1:1) à 30%.

7. Méthode selon la revendication 1, dans laquelle l'arôme est présent selon une proportion allant jusqu'à 15% en poids de la particule.

8. Particule contenant un arôme et séchée par pulvérisation, comprenant un arôme dans une matrice exempte de sucre, la matrice comprenant un émulsifiant, un agent filmogène et au moins un sel de métal, choisi parmi les sels ferreux, de métaux alcalins et de métaux alcalino-terreux des acides citrique, gluconique et tartrique, préparée par une méthode selon la revendication 1.

9. Particule contenant un arôme et séchée par pulvérisation selon la revendication 8, dans laquelle la teneur en arôme va jusqu'à 15% en poids de la particule.
